# EUROPÄISCHE PATENTSCHRIFT

(11) **EP 0 783 417 B1**
(45) Veröffentlichungstag und Bekanntmachung des Hinweises auf die Patenterteilung: **16.12.1998**
(21) Anmeldenummer: 95933429.3
(22) Anmeldetag: 26.09.1995
(51) Int. Cl.: B60S 1/34

(54) **VIERGELENKWISCHARM FÜR EINE SCHEIBENWISCHERANLAGE EINES KRAFTFAHRZEUGES**
QUADRUPLE-JOINT WIPER ARM FOR A WINDSCREEN WIPER SYSTEM OF A MOTOR VEHICLE
BRAS DE MONTURE D'ESSUIE-GLACE A QUATRE JOINTS ARTICULES POUR SYSTEME D'ESSUIE-GLACE D'UNE AUTOMOBILE

(30) Priorität: 12.10.1994 DE 4436373
(43) Veröffentlichungstag der Anmeldung: 16.07.1997
(73) Patentinhaber: ITT Automotive Europe GmbH, 60488 Frankfurt am Main (DE)
(72) Erfinder: SCHILL, Eduard, D-75446 Wiernsheim (DE); GROSSMANN, Michael, D-74343 Gro sachsenheim (DE)
(86) Internationale Anmeldenummer: EP9503804
(87) Internationale Veröffentlichungsnummer: WO9611824

(56) Entgegenhaltungen:
- EP-A- 0 182 123
- EP-A- 0 537 059

## Beschreibung

Die Erfindung bezieht sich auf einen Viergelenkwischarm für eine Scheibenwischeranlage eines Kraftfahrzeuges gemäß dem Oberbegriff des Anspruchs 1, wobei ein Gelenk zwischen einer Antriebswelle und einem Antriebslenker, ein weiteres Gelenk zwischen dem Antriebshebel und einem Koppelglied, ein weiteres Gelenk zwischen dem Koppelglied und einem Stützlenker und ein weiteres Gelenk zwischen dem Steuerhebel und einer Stützachse gebildet wird (EP-A-0 182 123).

Viergelenkwischarme, bei denen die bogenförmige Wischbewegung des Wischblattes auf der Scheibe durch eine zusätzliche Hubbewegung in Längsrichtung des Wischblattes überlagert ist, sind beispielsweise aus der DE 42 14 679 Al oder der EP 0 537 059 Al bekannt. In beiden Fällen sind sowohl der Antriebshebel als auch der Steuerhebel über jeweils eine Achse mit dem Koppelglied verbunden, wobei beide Achsen parallel zueinander und senkrecht zur Pendelebene des Koppelgliedes verlaufen. Bekanntlich muß das Wischblatt mit einer ausreichend großen Kraft auf die zu wischende Scheibe gepreßt werden, um eine gute Wischqualität zu erreichen. Die Anpreßkraft des Wischblattes wird durch eine vorgespannte Zugfeder erzeugt, welche mit ihren Enden an der Wischstange bzw. dem Gelenkteil einerseits und an dem Koppelglied andererseits derart eingehängt ist, daß das Gelenkteil mit Wischarm, welches schwenkbar an dem Koppelglied gelagert ist, relativ zu dem Koppelglied in Richtung auf die Scheibe bewegt wird.

Bei Auflage des Wischblattes auf der Scheibe wird eine durch die Federspannkraft erzeugte Spannung über das Schwenklager zwischen Gelenkteil und Koppelglied in das sogenannte Viergelenk übertragen. Das führt zu Verspannungen zwischen den Teilen des Viergelenks, speziell in den vier Schwenklagern. Diese Spannungen wiederum führen zu Störungen der Wischbewegungen, wodurch die Wischqualität verringert ist. Verspannungen in dem Viergelenk entstehen insbesondere auch dann, wenn die vier genannten Gelenkstellen nicht exakt genug zueinander ausgerichtet sind, was schon allein durch fertigungsbedingte Toleranzen herbeigeführt werden kann.

Aufgabe der Erfindung ist es, einen Viergelenkwischarm der eingangs beschriebenen Art derart weiterzuentwickeln, daß die Wischbewegungen ungestört ablaufen können.

Erfindungsgemäß wird die Aufgabe durch einen Viergelenkwischarm mit den Merkmalen des Anspruchs 1 gelöst, bei dem eines der beiden Gelenke zwischen Koppelglied und Antriebshebel oder Steuerhebel als Kugelgelenk und das andere Gelenk als Kardangelenk ausgebildet ist. Dadurch sind diese Gelenke mit zusätzlichen Bewegungsfreiheitsgraden ausgestattet, die einerseits eine statisch bestimmte Befestigung des Viergelenkwischarmes ermöglichen und andererseits die als nachteilig beschriebenen Verspannungen im Viergelenk nicht auftreten lassen. Die Wischbewegung kann nunmehr von den durch die als nachteilig beschriebenen Verspannungen des Viergelenkes befreit und damit ungestört erfolgen, was zu einer erheblichen Verbesserung der Wischqualität führt.

Als besonders vorteilhaft mit Bezug auf die Gleichmäßigkeit und Leichtigkeit der Wischbewegungen wird ein

Viergelenkwischarm empfohlen, bei dem gemäß Anspruch 2 das zwischen dem Koppelglied und dem Antriebshebel vorgesehene Gelenk als Kugelgelenk und das zwischen dem Koppelglied und dem Steuerhebel vorgesehene Gelenk als Kardangelenk ausgebildet ist. Diese Ausführung zeichnet sich durch eine exakte Führung des Wischarmes während der Wischbewegungen aus.

Als einfaches Kugelgelenk zwischen dem Koppelglied und dem Antriebshebel wird eine Ausführung gemäß Anspruch 3 angesehen, wonach das Kugelgelenk von einem einfachen Kugelbolzen und einer zugehörigen Kugelpfanne gebildet wird und der Kugelbolzen an dem Antriebshebel und die Kugelpfanne an dem Koppelglied befestigt ist.

Gemäß Anspruch 4 wird eine vorteilhafte Ausgestaltung des Kardangelenkes empfohlen, wonach die erste Schwenkachse dieses Kardangelenkes rechtwinklig zur Schwenkebene des Koppelgliedes und die zweite Schwenkachse des Kardangelenkes in der Schwenkebene des Koppelgliedes und dabei quer zur Längsachse des Koppelgliedes verläuft. Günstigerweise sollte zusätzlich zu diesen Merkmalen die Mittelachse des Kugelbolzens des Kugelgelenkes gemäß Anspruch 5 parallel zu der ersten Schwenkachse des Kardangelenkes verlaufen. Bei einer derartigen Anordnung der Schwenkachsen wird ein besonders leichter Lauf des Viergelenkes erreicht, sodaß der Antrieb der Scheibenwischeranlage wesentlich weniger Kraft auf den Antriebshebel des Viergelenkwischarmes übertragen muß.

Eine einfache Montage des Kardangelenkes ist dann gegeben, wenn gemäß Anspruch 6 der Gelenkzapfen des gabelförmigen Bolzens drehbar an dem Steuerhebel und das Koppelglied zwischen den Gabelschenkeln des Bolzens um die zweite Schwenkachse drehbar gelagert ist.

Um eine günstige seitliche Führung zwischen den gabelförmigen Bolzen des Kardangelenkes und dem Koppelglied zu erreichen, wird eine Ausführung gemäß Anspruch 7 empfohlen, wonach die Innenseiten der Gabelschenkel des Bolzens als seitliche Führungen ausgebildet sind und dementsprechend mit den betreffenden Außenseiten des Koppelgliedes zusammenwirken.

Anhand von Zeichnungen wird die Erfindung nachfolgend näher beschrieben. Es zeigen:
- Fig. 1: eine schematische Darstellung des Wischbildes aus der Sicht des Fahrers bei Verwendung eines Viergelenkwischarmes und eines herkömmlichen Wischarmes,
- Fig. 2: einen Viergelenkwischarm in Blickrichtung des Fahrers,
- Fig. 3: eine Draufsicht auf den Viergelenkwischarm aus Figur 2, jedoch ohne Gelenkteil,
- Fig 4.: einen vergrößerten Ausschnitt aus Figur 3, welcher das Kardangelenk zeigt und
- Fig. 5: eine Draufsicht zu Figur 4 in Schnittdarstellung.

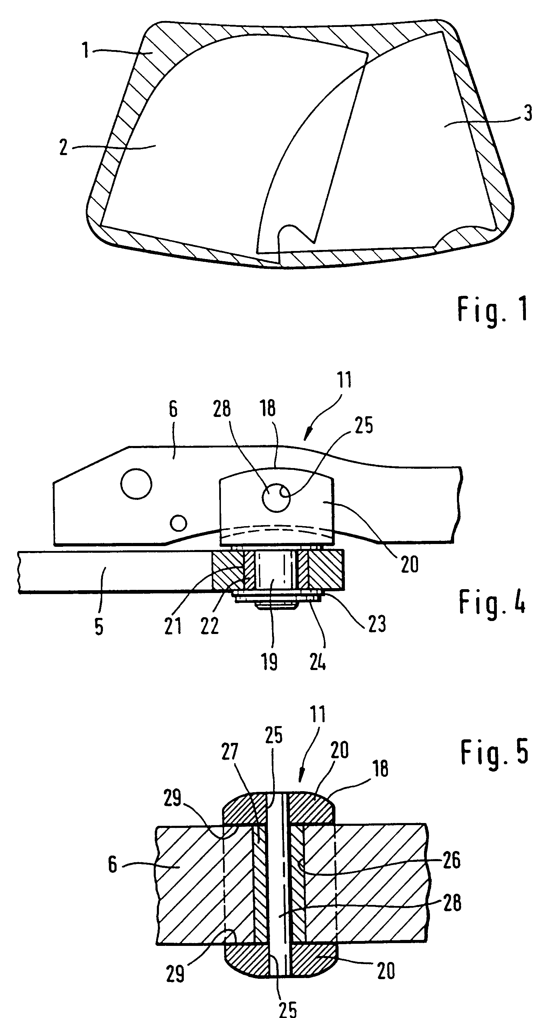

Auf der in Figur 1 schematisch dargestellten Windschutzscheibe eines Kraftfahrzeuges sind das linke Wischfeld 2, welches durch einen erfindungsgemäßen Viergelenkwischarm erzeugt wurde, und das rechte Wischfeld 3, welches von einem herkömmlichen Wischarm erzeugt wurde, erkennbar. Aus den Umrißlinien des Wischfeldes 2 ist ersichtlich, daß der Viergelenkwischarm nicht nur eine Drehbewegung um eine Wischerwelle sondern auch noch eine überlagerte Hubbewegung ausführt. Diese Bewegung des Wischarmes und damit seines nicht dargestellten Wischblattes erreicht man mit Hilfe eines sogenannten Viergelenkes.

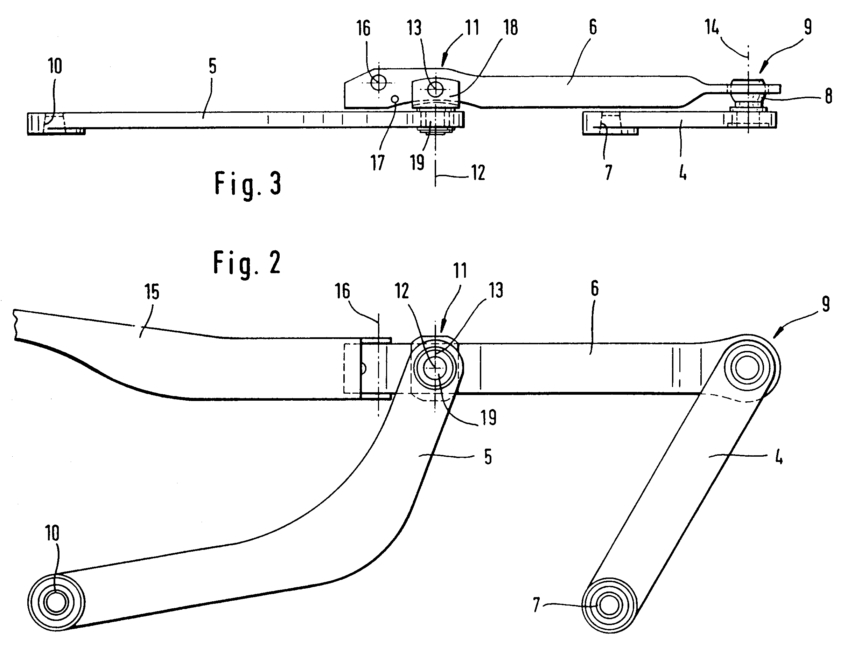

Aus den Figuren 2 und 3 ist die Konstruktion eines solchen Viergelenkes ersichtlich. Dessen wesentliche Bestandteile sind ein Antriebshebel 4, ein Steuerhebel 5 und ein Koppelglied 6. Der Antriebshebel 4 besitzt an einem Ende eine konische Aufnahmeöffnung 7, mittels welcher er drehfest mit einer nicht dargestellten Antriebswelle zu verbinden ist, die wiederum in einem karosseriefesten Lager angeordnet ist. Die karosseriefeste Position der Antriebswelle entspricht der in den Figuren 2 und 3 dargestellten Position der Aufnahmeöffnung 7. An dem der Aufnahmeöffnung 7 gegenüberliegenden Ende ist ein Kugelbolzen 8 derart an dem Antriebshebel 4 befestigt, daß seine Mittelachse rechtwinklig zum Antriebshebel 4 und damit auch rechtwinklig zur Schwenkebene des Koppelgliedes 6 verläuft. Auf den Kugelbolzen 8 ist eine Kugelpfanne aufgesetzt, die mit Bezug auf die Zeichnungen am rechten Ende des Koppelgliedes 6 befestigt ist. Somit ist zwischen Antriebshebel 4 und Koppelglied 6 das Kugelgelenk 9 gebildet.

Im Abstand seitlich neben dem Antriebshebel 4 ist der abgewinkelte Steuerhebel 5 angeordnet. Der Steuerhebel 5 ist an einem Ende mit einer konischen Aufnahmeöffnung 10 versehen, über welche er drehfest mit einer Stützachse verbindbar ist, die ebenfalls in einem karosseriefesten Lager angeordnet ist. Die ortsfeste Position der drehbaren Stützachse stimmt mit der Position der Aufnahmeöffnung 10 in den Figuren 2 und 3 überein. Der Steuerhebel 5 ist an seinem der Aufnahmeöffnung 10 gegenüberliegenden Ende über ein Kardangelenk 11 an dem Koppelglied 6 angelenkt. Der Anlenkort des Steuerhebels 5 am Koppelglied 6 befindet sich nahe dem Ende des Koppelgliedes, welches dem Kugelgelenk 9 gegenüberliegt. Aus den Figuren 3 und 4 ist deutlich ersichtlich, daß eine erste Schwenkachse 12 des Kardangelenkes 11 rechtwinklig zu der Schwenkebene des Koppelgliedes 6 und eine zweite Schwenkachse 13 des Kardangelenkes 11 in der Schwenkebene des Koppelgliedes 6 und dabei quer zu dem Koppelglied 6 verläuft. Die erste Schwenkachse 12 des Kardangelenkes 11 verläuft außerdem parallel zur Mittelachse 14 des Kugelbolzens 8.

An dem dem Kardangelenk 11 benachbarten Ende ist ein Gelenkteil 15 (Fig. 2) um die Schwenkachse 16 schwenkbar an dem Koppelglied 6 angelenkt. Die Schwenkachse 16 verläuft ebenfalls in der Schwenkebene des Koppelgliedes 6 und dabei quer zum Koppelglied 6. Dadurch wird die Schwenkbarkeit des Gelenkteiles 15 mit der nicht dargestellten Wischstange und dem daran angelenkten ebenfalls nicht dargestellten Wischblatt in Richtung auf die zu wischende Scheibe 1 gewährleistet. Aus Figur 3 ist noch der Einhängepunkt 17 für die ebenfalls nicht dargestellte als Zugfeder ausgebildete Anpreßfeder ersichtlich.

Da der konstruktive Aufbau von Gelenkteil, Wischstange, Wischblatt und Anpreßfeder sowie deren Anordnung und Befestigung allgemein bekannt sind, muß dieses nicht näher erläutert werden.

Aus den Figuren 4 und 5 ist die Ausbildung des Kardangelenkes 11 deutlicher ersichtlich. Zu dem Kardangelenk 11 gehört ein gabelförmiger Bolzen 18, der aus einem zylindrischen Gelenkzapfen 19 und zwei parallelen Gabelschenkeln 20 besteht. Der Gelenkzapfen 19 ist drehbar mit dem Steuerhebel 5 verbunden. Dazu besitzt der Steuerhebel 5 eine entsprechende Durchgangsbohrung 21, in welche eine Lagerbuchse 22 eingesetzt ist. Der Gelenkzapfen 19 durchgreift mit seinem freien Ende die Lagerbuchse 22 und ist mittels einer Unterlegscheibe 23 und einem darunter in einer umlaufenden Ringnut fixierten Sicherungsring 24 in axialer Richtung an dem Steuerhebel 5 gehalten. Die Gabelschenkel 20 sind von fluchtenden Bohrungen 25 durchsetzt, welche konzentrisch zu der zweiten Schwenkachse 13 des Kardangelenkes verlaufen. Das Koppelglied 6 ist quer zu seiner Längsrichtung ebenfalls von einer Durchgangsbohrung 26 durchsetzt, in welcher eine Lagerbuchse 27 angeordnet ist. Das Koppelglied 6 ist so zwischen den Gabelschenkeln 20 des Bolzens 18 angeordnet, daß die Durchgangsöffnung der Lagerbuchse 27 mit den Bohrungen 25 in den Seitenschenkeln 20 fluchtet. Ein Bolzen 28 ist in die Bohrungen 25 und dabei gleichzeitig in die Lagerbuchse 27 eingesetzt. Der Bolzen 28 und die Bohrungen 25 in den Seitenschenkeln 20 sind so aufeinander abgestimmt, daß der Bolzen 28 in den Bohrungen 25 einen Preßsitz einnimmt und somit drehfest an den Seitenschenkeln 20 gehalten ist. In der Lagerbuchse 27 des Koppelgliedes 6 ist der Bolzen 28 drehbar gelagert. Zur Verbesserung der seitlichen Führung des Koppelgliedes 6 sind die Innenseiten 29 der Gabelschenkel 20 als Anlagefläche in Bezug auf die Außenseiten des Koppelgliedes 6 ausgebildet.

Das Kugelgelenk 9 sorgt für räumliche Bewegungsfreiheiten zwischen dem Antriebshebel 4 und dem Koppelglied 6. Außer einer Drehung um die Mittelachse 14 des Kugelgelenkes sind zusätzliche Verschwenkungen zwischen Koppelglied 6 und Antriebshebel 4 möglich. Das Kardangelenk 11 ermöglicht ebenfalls einen zusätzlichen Bewegungsfreiheitsgrad senkrecht zur Schwenkebene des Koppelgliedes 6. Außer der benötigten Drehbewegung um die erste Schwenkachse 12 wird also ein zusätzliches Schwenken des Koppelgliedes 6 um die zweite Schwenkachse 13 ermöglicht. Trotzdem wird durch die Anordnung der zweiten Schwenkachse 13 in der Schwenkebene des Koppelgliedes 6 und dabei quer zur Längsrichtung des Koppelgliedes 6 die Einhaltung des gewünschten Winkels zwischen dem Wischblatt und der Scheibe 1, der im Normalfall 900 betragen soll, gewährleistet. Das Kugelgelenk 9 und das Kardangelenk 11 bewirken gemeinsam, daß durch die zusätzlichen Bewegungsfreiheitsgrade schädigende Verspannungen im Gelenkviereck vermieden werden. In der Folge wird ein leichter und gleichmäßiger Bewegungsablauf des Viergelenkwischarmes bei dessen Betrieb gewährleistet, wodurch eine verbesserte Wischqualität erreicht wird. Außerdem wird sich wegen der fehlenden Verspannung im Gelenkviereck das Verschleißverhalten insbesondere in den vier Gelenken deutlich verbessern, wodurch einerseits die Lebensdauer der Scheibenwischeranlage verlängert und andererseits die gute Wischqualität über einen wesentlich längeren Zeitraum erhalten bleiben wird.

Abschließend soll noch bemerkt werden, daß die Erfindung nicht auf das in den Zeichnungen dargestellte Ausführungsbeispiel beschränkt ist. Ebenfalls gute Resultate sind erzielbar, wenn das Kardangelenk 11 zwischen Antriebshebel 4 und Koppelglied 6 und das Kugelgelenk 9 zwischen dem Steuerhebel 5 und dem Koppelglied 6 vorgesehen sind. Auch sind außer dem in den Figuren 4 und 5 dargestellten Ausführungsbeispiel des Kardangelenkes 11 andere vorteilhafte Ausgestaltungen denkbar.

## Patentansprüche

1. Viergelenkwischarm für eine Scheibenwischeranlage eines Kraftfahrzeuges, bei welchem die Wischbewegung des Wischblattes auf der Scheibe (1) durch eine zusätzliche Hubbewegung in Längsrichtung des Wischblattes überlagert.wird, wobei der Wischarm aus einem mit einer ortsfest an der Fahrzeugkarosserie gelagerten Antriebswelle verbindbaren Antriebshebel (4), einem seitlich davon angeordneten, mit einer ortsfest an der Fahrzeugkarosserie gelagerten Stützachse verbindbaren Steuerhebel (5) und einer jeweils über ein Gelenk mit den freien Enden von Antriebshebel (4) und Steuerhebel (5) verbundenen Koppelglied (6) sowie einem um eine in der Pendelebene des Wischarmes verlaufenden Schwenkachse (16) schwenkbar an dem Koppelglied (6) gelagerten Gelenkteil (15), das unmittelbar oder über eine Wischstange ein Wischblatt trägt, und einer Einrichtung zum Anpressen des Wischblattes an die zu wischende Scheibe (1), vorzugsweise einer mit jeweils einem Ende an dem Gelenkteil (15) oder der Wischstange und dem Koppelglied (6) angelenkten, gespannten Zugfeder besteht und eines der beiden Gelenke zwischen Koppelglied (6) und Antriebshebel (4) oder Steuerhebel (5) als Kugelgelenk (9) ausgebildet ist, **dadurch gekennzeichnet,** daß das andere der beiden Gelenke zwischen Koppelglied (6) und Antriebshebel (4) oder Steuerhebel (5) als Kardangelenk (11) ausgebildet ist, daß zu dem Kardangelenk (11) ein gabelförmiger Bolzen (18) mit einem die erste Schwenkachse (12) bildenden Gelenkzapfen (19) und zwei Gabelschenkeln (20) gehört, durch welche rechtwinklig zum Gelenkzapfen (19) die zweite Schwenkachse (13) verläuft, daß die zweite Schwenkachse (13) des Kardangelenkes (11) von einem Bolzen (28) gebildet wird, der in fluchtenden Bohrungen (25, 26) in den Gabelschenkeln (20) des gabelförmigen Bolzens (18) und im Koppelglied (6) angeordnet ist und daß der Bolzen (28) mit mindestens einem Ende an einem Gabelschenkel (20) fixiert und in der Bohrung (26) des Koppelgliedes (6), und dabei vorzugsweise in einer in die Bohrung (26) des Koppelgliedes (6) eingesetzten Lagerbuchse (27), drehbar gelagert ist.

2. Viergelenkwischarm nach Anspruch 1, **dadurch gekennzeichnet,** daß das Gelenk zwischen Koppelglied (6) und Antriebshebel (4) als Kugelgelenk (9) und das Gelenk zwischen Koppelglied (6) und Steuerhebel (5) als Kardangelenk (11) ausgebildet ist.

3. Viergelenkwischarm nach Anspruch 2, **dadurch gekennzeichnet,** daß das Kugelgelenk (9) von einem Kugelbolzen (8) und einer Kugelpfanne gebildet wird, wobei der Kugelbolzen (8) am Antriebshebel (4) und die Kugelpfanne am dem Gelenkteil (15) gegenüberliegenden Ende des Koppelgliedes (6) befestigt ist.

4. Viergelenkwischarm nach einem der vorhergehenden Ansprüche, **dadurch gekennzeichnet,** daß die erste Schwenkachse (12)des Kardangelenkes (11) rechtwinklig zur Schwenkebene des Koppelgliedes (6) und die zweite Schwenkachse (13) des Kardangelenkes (11) in der Schwenkebene des Koppelgliedes (6) und quer zu dessen Längsachse verläuft.

5. Viergelenkwischarm nach einem der vorhergehenden Ansprüche, **dadurch gekennzeichnet,** daß die Mittelachse (14) des Kugelbolzens (8) parallel zu der ersten Schwenkachse (12) des Kardangelenkes (11) verläuft.

6. Viergelenkwischarm nach einem der vorhergehenden Ansprüche, **dadurch gekennzeichnet,** daß der Gelenkzapfen (19) des gabelförmigen Bolzens (18)drehbar an dem Steuerhebel (5) gelagert ist und daß das Koppelglied (6) zwischen den Gabelschenkeln (20) des Bolzens (18) um die zweite Schwenkachse (13) drehbar gelagert ist.

7. Viergelenkwischarm nach einem der vorhergehenden Ansprüche, **dadurch gekennzeichnet,** daß die Innenseiten (19) der Gabelschenkel (20) des Bolzens (18) als seitliche Führungen ausgebildet sind und dementsprechend mit den betreffenden Außenseiten des Koppelgliedes (6) zusammenwirken.

## Claims

1. Four-joint wiper arm for a windshield wiper system of a motor vehicle, wherein the wiping movement of the wiper blade on the windshield (1) is combined with an additional stroke movement in the longitudinal direction of the wiper blade, with the wiper arm consisting of a primary lever (4) that can be connected to a stationary primary shaft supported by the vehicle body, a control lever (5), arranged alongside the primary lever, that can be connected to a stationary supporting arbor supported by the vehicle body, and a coupling link (6) connected by means of one joint respectively to the free ends of the primary lever (4) and control lever (5), as well as a joint section (15), supported by the coupling link (6) and pivoted about a pivot axis (16) moving about the pendulum plane of the wiper arm, that carries a wiper blade either directly or indirectly by means of a wiper rod, and a device in order to press the wiper blade on the windshield (1) to be wiped, preferably a tension spring under stress, coupled by one end respectively to the joint section (15) or the wiper rod and the coupling link (6), wherein one of the two joints is in the form of a ball-and-socket joins (9) between the coupling link (6) and primary lever (4) or the control lever (5),
characterized in that the other one of the two joints between the coupling link (6) and primary lever (4) or control lever (5) is in the form of a universal joint (11), in that the universal joint (11) includes a forked pin (18) with a pivot pin (19) that forms the first pivot axis (12) and two fork legs (20), through which the second pivot axis (13) extends at right angles to the pivot pin (19), in that the second pivot axis (13) of the universal joint (11) is formed by a pin (28), that is arranged in aligned drilled holes (25,26) in the fork legs (20) of the forked pin (18) and in the coupling link (6), and in that at least one end of the pin (28) is fixed to a fork leg (20) and pivoted in the drilled hole (26) of the coupling link (6), and preferably pivoted in a bearing sleeve (27) inserted in the drilled hole (26) of the coupling link (6).

2. Four-joint assembly wiper arm as claimed in claim 1,
characterized in that the joint between coupling link (6) and primary lever (4) is in the form of a ball-and-socket joint (9) and the joint between coupling link (6) and control lever (5) is in the form of a universal joint (11).

3. Four-joint assembly wiper arm as claimed in claim 2,
characterized in that the ball-and-socket joint (9) is formed by a ball pin (8) and a ball cup, with the ball pin (8) fastened to the primary lever (4) and the ball cup fastened to the end of the coupling link (6) opposite the joint section (15).

4. Four-joint assembly wiper arm as claimed in any one of the preceding claims,
characterized in that the first pivot axis (12) of the universal joint (11) extends at right angles to the pivot plane of the coupling link (6) and the second pivot axis (13) of the universal joint (11) extends in the pivot plane of the coupling link (6) and transverse to the longitudinal axis of the coupling link.

5. Four-joint assembly wiper arm as claimed in any one of the preceding claims,
characterized in that the center axis (14) of the ball pin (8) extends in parallel to the first pivot axis (12) of the universal joint (11).

6. Four-joint assembly wiper arm as claimed in any one of the preceding claims,
characterized in that the pivot pin (19) of the forked pin (18) is pivoted on the control lever (5), and in that the coupling link (6) is pivoted between the fork legs (20) of the pin (18) about the second pivot axis (13).

7. Four-joint assembly wiper arm as claimed in any one of the preceding claims,
characterized in that the inner sides (19) of the fork legs (20) of the pin (18) are in the form of lateral guides and accordingly cooperate with the relevant outer sides of the coupling link (6).

## Revendications

1. Bras d'essuie-glace à quatre articulations pour un système d'essuie-glace d'un véhicule automobile, où le mouvement de balayage du balai d'essuie-glace sur la vitre (1) est complété d'un mouvement supplémentaire de levée dans le sens longitudinal du balai d'essuie-glace, le bras d'essuie-glace étant composé d'une manivelle d'entraînement (4) pouvant être reliée à un arbre d'entraînement logé de façon stationnaire dans la carrosserie du véhicule, d'un levier de commande (5) disposé à côté de celui-ci, pouvant être relié à un axe de support logé de façon stationnaire sur la carrosserie du véhicule, et d'un élément d'accouplement (6) respectivement relié, par l'intermédiaire d'une articulation, aux extrémités libres de la manivelle d'entraînement (4) et du levier de commande (5), ainsi que d'un élément articulé (15) logé sur l'élément d'accouplement (6) de façon pivotante autour d'un axe de pivotement (16) s'étendant dans le plan d'oscillation du bras d'essuie-glace, cet élément articulé portant directement ou par l'intermédiaire d'une tige d'essuie-glace un balai d'essuie-glace, et d'un dispositif destiné à plaquer le balai d'essuie-glace sur la vitre à nettoyer (1), de préférence un ressort de traction tendu, respectivement relié, par ses extrémités, à l'élément articulé (15) ou à la tige d'essuie-glace et à l'élément d'accouplement (6), et où l'une des deux articulations comprises entre l'élément d'accouplement (6) et la manivelle d'entraînement (4) ou du levier de commande (5) est réalisée sous forme d'une articulation à rotule (9), caractérisé en ce que l'autre des deux articulations comprises entre l'élément d'accouplement (6) et la manivelle d'entraînement (5) est réalisée sous forme d'un joint à cardan (11), en ce qu'un boulon (18) en forme de chape, comportant un tourillon (19) formant le premier axe de pivotement (12) et deux branches de chape (20), à travers lesquelles s'étend, perpendiculairement au tourillon (19), le second axe de pivotement (13), fait partie du joint à cardan (11), en ce que le second axe de pivotement (13) du joint à cardan (11) est constitué par un axe (28) qui est disposé dans des alésages alignés (25, 26) ménagés dans les branches de chape (20) du boulon (18) en forme de chape et dans l'élément d'accouplement (6), et en ce que l'axe (28) est fixé, par l'une de ses extrémités au moins, dans une branche de chape (20), et est logé de façon pivotante dans l'alésage (26) de l'élément d'accouplement (6), et de préférence dans un coussinet (27) emmanché dans l'alésage (26) de l'élément d'accouplement (6).

2. Bras d'essuie-glace à quatre articulations selon la revendication 1, caractérisé en ce que l'articulation comprise entre l'élément d'accouplement (6) et la manivelle d'entraînement (4), est réalisée sous forme d'une articulation à rotule (9), et en ce que l'articulation comprise entre l'élément d'accouplement (6) et le levier de commande (5) est réalisée sous forme d'un joint à cardan (11).

3. Bras d'essuie-glace à quatre articulations selon la revendication 2, caractérisé en ce que l'articulation à rotule (9) est constituée d'un boulon à rotule (8) et d'une cuvette à rotule, le boulon à rotule (8) étant fixé sur la manivelle d'entraînement (4) et la cuvette à rotule étant fixée sur l'élément d'accouplement (6), à l'extrémité de celui-ci, qui est opposée à l'élément articulé (15).

4. Bras d'essuie-glace à quatre articulations selon l'une des revendications précédentes, caractérisé en ce que le premier axe de pivotement (12) du joint à cardan (11) s'étend perpendiculairement au plan d'oscillation de l'élément d'accouplement (6), et que le second axe de pivotement (13) du joint à cardan (11) s'étend dans le plan d'oscillation de l'élément d'accouplement (6) et transversalement à l'axe longitudinal de celui-ci.

5. Bras d'essuie-glace à quatre articulations selon l'une des revendications précédentes, caractérisé en ce que l'axe médian (14) du boulon à rotule (8) s'étend parallèlement au premier axe de pivotement (12) du joint à rotule (11).

6. Bras d'essuie-glace à quatre articulations selon l'une des revendications précédentes, caractérisé en ce que le tourillon (19) du boulon (18) en forme de chape est logé dans le levier de commande (5), et en ce que l'élément d'accouplement (6) est logé entre les branches de chape (20) du boulon (18), de façon pivotante autour du second axe de pivotement (13).

7. Bras d'essuie-glace à quatre articulations selon l'une des revendications précédentes, caractérisé en ce que les faces intérieures (19) des branches de chape (20) du boulon (18) sont configurées comme des guides latéraux et coopèrent en conséquence avec les faces extérieures correspondantes de l'élément d'accouplement (6).
